# EUROPÄISCHE PATENTSCHRIFT

(11) **EP 2 718 603 B1**
(45) Veröffentlichungstag und Bekanntmachung des Hinweises auf die Patenterteilung: **01.07.2015**
(21) Anmeldenummer: 12715049.8
(22) Anmeldetag: 10.04.2012
(51) Int. Cl.: F16K 31/06, B60T 8/36

(54) **ELEKTROMAGNETISCH BETÄTIGBARES VENTIL**
ELECTROMAGNETIC OPERATED VALVE
SOUPAPE À COMMANDE ELECTROMAGNETIQUE

(30) Priorität: 07.06.2011 DE 102011077069
(43) Veröffentlichungstag der Anmeldung: 16.04.2014
(73) Patentinhaber: Robert Bosch GmbH, 70442 Stuttgart (DE)
(72) Erfinder: HEYER, Klaus, 71691 Freiberg (DE); KAESTNER, Frank, 74321 Bietigheim-Bissingen (DE); ALAZE, Norbert, 71706 Markgroeningen (DE); KRATZER, Dietmar, 71732 Tamm (DE)
(86) Internationale Anmeldenummer: PCT/EP2012/056395
(87) Internationale Veröffentlichungsnummer: WO 2012/167967

(56) Entgegenhaltungen:
- EP-B1- 1 232 082
- DE-A1- 10 064 169
- DE-A1- 10 311 486
- JP-A- 59 159 477
- US-A- 3 653 630
- US-A1- 2006 097 210

## Beschreibung

Die Erfindung betrifft ein elektromagnetisch betätigbares Ventil, insbesondere für Hydrauliksysteme von Kraftfahrzeugen, gemäß dem Oberbegriff des Anspruchs 1.

### Stand der Technik

Derartige Ventile sind aus dem Stand der Technik bekannt und finden häufig Verwendung in Hydrauliksystemen von Kraftfahrzeugen, insbesondere in sicherheitsrelevanten Hydrauliksystemen, wie beispielsweise in Bremssystemen oder dergleichen. So offenbart beispielsweise die europäische Patentschrift EP 1 232 082 B1 ein elektromagnetisch betätigbares Ventil, das einen in einer Hülse fest angeordneten Magnetkern umfasst, der bei Inbetriebnahme eine Magnetkraft auf einen in der Hülse axial verlagerbar angeordneten Magnetanker ausübt. Der Magnetanker ist dabei mit einem Ventilelement zu dessen Betätigung verbunden, wobei das Ventilelement eine Durchströmungsöffnung des Elektromagnetventils bei Betätigung freigibt. Üblicherweise wird zum Betätigen des Ventils der Magnetanker von dem Magnetkern angezogen, sodass sich der Abstand zwischen Magnetanker und Magnetkern verringert und das Ventilelement aus einem Ventilsitz herausgezogen wird. Es handelt sich hierbei also um ein sogenanntes stromlos geschlossenes Ventil, das im stromlosen, also nicht betätigten Zustand, ein sicheres Verschließen der Durchströmungsöffnung gewährleistet. Außerdem ist zwischen dem Magnetanker und dem Magnetkern ein Federelement vorgesehen, das elastisch verformbar ist und zwischen Magnetkern und Magnetanker verspannt beziehungsweise verspannbar gehalten ist. Dazu liegt das Federelement an einer dem Magnetanker zugewandten Kernstirnfläche des Magnetkerns und einer dem Magnetkern zugewandten Ankerstirnfläche des Magnetankers an, wodurch jeweils zumindest ein Anlagepunkt an Ankerstirnfläche und Kernstirnfläche gebildet wird. Durch das Federelement wird der Magnetanker und damit das Ventilelement in die Schließstellung gedrängt.

Wie auch in der EP 1 232 082 B1 beschrieben, sind die Stirnflächen, also die Ankerstirnfläche und die Kernstirnfläche, üblicherweise derart ausgebildet, dass sie in Radialerstreckung, also von der Mittel- beziehungsweise Rotationsachse ausgehend nach außen, schräg verlaufen, sodass in einem Längsschnitt durch das Ventil gesehen die Stirnflächen eine im Wesentlichen V-förmige Kontur aufweisen, die unter anderem das bereichsweise Eindringen beispielsweise des Magnetkerns in den Magnetanker erlauben, wodurch ein kleiner Abstand und somit eine effiziente Ausnutzung der Magnetkräfte gewährleistet wird.

### Offenbarung der Erfindung

Das erfindungsgemäße elektromagnetisch betätigbare Ventil zeichnet sich durch die Merkmale des Anspruchs 1 aus. Das erfindungsgemäße (Elektromagnet-) Ventil hat den Vorteil, dass sich in Abhängigkeit vom Ventilhub die wirkende Federkraft zwischen Magnetkern und Magnetanker verändert, wodurch ein progressiver Kraft-Weg-Kennlinien-Verlauf des Federelements erzeugt oder auch überhöht werden kann. Das erfindungsgemäße Ventil zeichnet sich dadurch aus, dass die Kontur des Federelements, der Ankerstirnfläche und/oder der Kernstirnfläche in Radialerstreckung derart geformt ist, dass sich die Radialposition zumindest eines der Anlagepunkte in Abhängigkeit von dem Abstand der Ankerstirnfläche zu der Kernstirnfläche verändert, wobei die jeweilige Kontur in Radialerstreckung gestuft ausgebildet ist.

Durch eine geeignete Wahl der Geometrie beziehungsweise Kontur der Stirnflächen und/oder des Federelements lässt sich erreichen, dass zumindest einer der Anlagepunkte in Abhängigkeit von dem Ventilhub beziehungsweise dem Abstand zwischen den Stirnflächen radial wandert. Vorzugsweise sind die Konturen derart gewählt, dass der zumindest eine Anlagepunkt mit abnehmendem Abstand der Stirnflächen sich derart verlagert, dass die Federkraft erhöht wird. Hierdurch wird eine vorteilhafte Dämpfung der Bewegung des Magnetankers bei dessen Betätigung erfolgen. Unter der Kontur des jeweiligen Elements in Radialerstreckung ist hierbei stets die Erstreckung des Elements ausgehend vom Mittelpunkt beziehungsweise der Rotationsachse zu verstehen. Bevorzugt ist die Kontur des Federelements entsprechend geformt, während die Konturen der Stirnflächen gerade beziehungsweise senkrecht zur Bewegungsachse des Magnetankers verlaufen. Gemäß einer alternativen bevorzugten Ausführungsform ist zumindest eine der Stirnflächen entsprechend geformt, während das Federelement als flaches beziehungsweise in einer Ebene liegendes Federelement, insbesondere in einer Ebene senkrecht zur Bewegungsachse des Magnetankers, ausgebildet ist. Gemäß der Erfindung ist vorgesehen, dass das Federelement, die Ankerstirnfläche und/oder die Kernstirnfläche beziehungsweise deren Konturen derart geformt sind, dass sich in Abhängigkeit von dem Abstand der Ankerstirnfläche zu der Kernstirnfläche der Abstand der Anlagepunkte zumindest radial gesehen zueinander verändert. Hierdurch wird erreicht, dass sich der Feder- beziehungsweise Hebelweg des Federelements in Abhängigkeit von dem Abstand der Stirnflächen zueinander verändert, wodurch sich die Federkraft auch dann verändert, wenn die Federscheibe über ihre gesamte Erstreckung hinweg die gleiche Stärke/Dichte aufweist. Weist die Federscheibe in Radialerstreckung unterschiedliche Stärken/Dicken auf, wird die Federkraft zusätzlich zu der Verkürzung des Hebelarms verändert.

Besonders bevorzugt bildet das Federelement mit der Ankerstirnfläche und/oder mit der Kernstirnfläche jeweils eine Vielzahl von Anlagepunkten als Anlagelinie oder Anlagefläche. Besonders bevorzugt erstrecken sich die Anlagelinie oder die Anlagefläche über den gesamten Umfang des vorzugsweise kreisförmigen Federelements, sodass eine gleichmäßige Belastung und Kraftverteilung beziehungsweise -übertragung erfolgt. Zweckmäßigerweise sind Kernstirnfläche, Ankerstirnfläche und Federelement rotationssymmetrisch ausgebildet.

Vorzugsweise ist das Federelement als insbesondere ebene Scheibenfeder ausgebildet, die insbesondere ringförmig ausgebildet ist, sodass sie im Zentrum eine Öffnung aufweist. Derartige Scheibenfedern sind weit verbreitet, sodass deren Verwendung eine besonders kostengünstige Ausführungsform des Ventils ermöglicht.

Gemäß einer vorteilhaften Weiterbildung der Erfindung ist vorgesehen, dass die jeweilige Kontur in Radialerstreckung gekrümmt ausgebildet ist. Die Krümmung der Kontur und die Stufung erlaubt es auf einfache Art und Weise, dass die Anlagepunkte in Abhängigkeit von dem Abstand der Stirnflächen zueinander wandern. Dabei können je nach Ausführungsform die Anlagepunkte kontinuierlich oder schrittweise verändert werden. Insbesondere bei der gestuften Ausbildung der Kontur erfolgt ein schrittweises Verändern der Anlagepunkte, während bei einer gekrümmten Ausbildung auch ein kontinuierliches Wandern der Anlagepunkte entlang der jeweiligen Stirnfläche realisierbar ist. Natürlich ist auch eine Mischform denkbar, bei der zumindest eine der Stirnflächen und/oder das Federelement sowohl gekrümmt als auch gestuft in Radialerstreckung geformt ist.

Bevorzugt weist die jeweilige Krümmung mindestens einen Radius, vorzugsweise mehrere unterschiedliche aufeinanderfolgende Radien auf. Hierdurch lässt sich eine gewünschte Kraft-Weg-Kennlinie des Federelements auf einfache Art und Weise einstellen.

Die jeweilige gestufte Kontur weist mindestens eine, vorzugsweise mehrere aufeinanderfolgende Stufen mit gleicher oder unterschiedlicher Stufung und gleichem oder unterschiedlichem Abstand zueinander auf. Unter der Stufung ist hierbei die Höhe der Stufen zu verstehen. Somit wird nicht nur durch den Abstand von mehreren Stufen zueinander, sondern auch durch die Höhe der jeweiligen Stufen die Kraft-Weg-Kennlinie des Federelements beeinflusst.

Gemäß einer bevorzugten Ausführungsform der Erfindung ist vorgesehen, dass die Ankerstirnfläche und die Kernstirnfläche zumindest im Wesentlichen komplementär zueinander ausgebildet sind. Dies erlaubt es trotz dem Vorsehen der Krümmung beziehungsweise der mindestens einen Stufe, dass Magnetkern und Magnetanker zumindest bereichsweise ineinander greifen können, um einen minimalen Abstand zwischen den Stirnflächen zu ermöglichen. Dadurch wird der sogenannte Luftspalt zwischen Magnetanker und Magnetkern klein gehalten und die Magnetkraft optimal ausgenutzt.

Gemäß einer vorteilhaften Weiterbildung der Erfindung ist vorgesehen, dass das Federelement als Tellerfeder ausgebildet ist und die Kernstirnfläche und/oder die Ankerstirnfläche gekrümmt oder gestuft ausgebildet sind. Hierbei ist also vorgesehen, dass zusätzlich zu einer Krümmung oder Stufe in zumindest einer der Stirnflächen das Federelement einen von der scheibenförmigen Ausbildung abweichenden Verlauf in Radialerstreckung aufweist und insofern selbst eine Kontur in Radialerstreckung bildet, die nicht senkrecht zur Rotationsachse verläuft. Dabei kann die Kontur schräg oder auch gekrümmt oder gestuft ausgebildet sein.

Weitere Ausführungsformen ergeben sich aus den Ansprüchen sowie aus den in den Figuren gezeigten und im Folgenden beschriebenen Ausführungsbeispielen. Dabei zeigen
- Figur 1: ein elektromagnetisch betätigbares Ventil in einer Längsschnittdarstellung,
- Figuren 2A und 2B: vorteilhafte Ausführungsbeispiele und
- Figur 3: ein weiteres vorteilhaftes Ausführungsbeispiel.

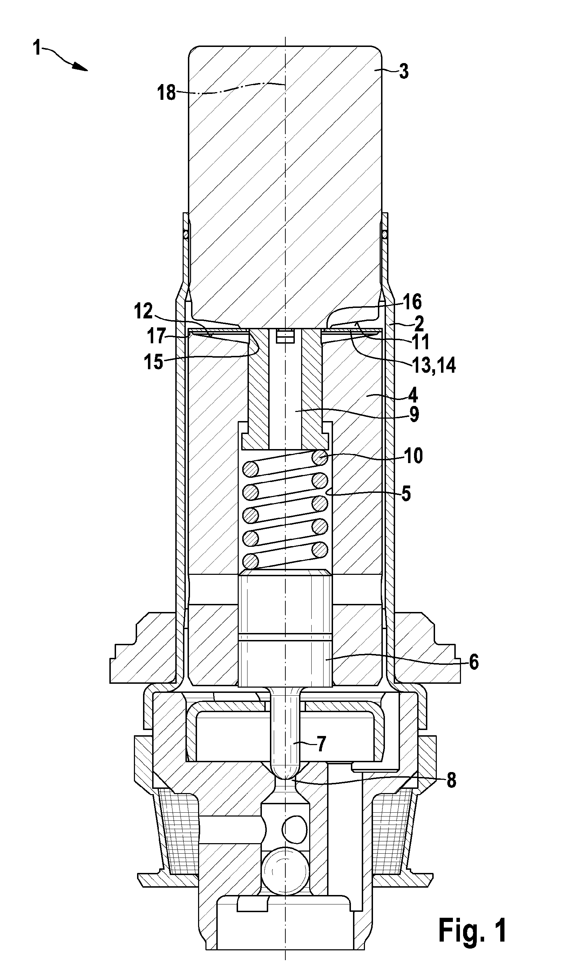

Figur 1 zeigt in einer Längsschnittdarstellung ein elektromagnetisch betätigbares Ventil 1, das insbesondere in Hydrauliksystemen von Kraftfahrzeugen verbaubar ist. Das Ventil 1 weist eine im Wesentlichen zylinderförmige Hülse 2 auf, welche an einem Ende einen Magnetkern 3 trägt, der fest mit der Hülse 2 verbunden ist. Dem Magnetkern 3 ist eine hier nicht näher dargestellte Spule zugeordnet, durch deren Bestromung der Magnetkern 3 einen in der Hülse axial verlagerbar angeordneten Magnetanker 4 anzieht.

Der Magnetanker 4 weist eine gestufte Durchgangsbohrung 5 auf, in welcher an der dem Magnetkern 3 abgewandten Seite ein Ventilelement 6 gehalten ist, das eine Ventilspitze 7 aufweist, die mit einem Ventilsitz beziehungsweise mit einer Ventilöffnung 8 zum Verschließen oder Freigeben eines Durchströmungsquerschnitts zusammenwirkt. In der Durchbohrung 5 ist weiterhin ein axial verlagerbares Druckstück 9 gehalten, das einendig von einem als Schraubenfeder 10 ausgebildeten Federelement beaufschlagt ist, welches sich einendig an dem Ventilelement 6 abstützt, und anderendig an dem Magnetkern 3. Der Magnetkern 3 weist hierbei eine dem Magnetanker 4 zugewandte, rotationssymmetrische Kernstirnfläche 11 auf, und der Magnetanker 4 eine dem Magnetkern 3 zugewandte, rotationssymmetrische Ankerstirnfläche 12. Das Druckstück 9 ragt über die Ankerstirnfläche 12 hinaus und liegt an der Kernstirnfläche 11 mittig an.

Zwischen dem Magnetkern 3 und dem Magnetanker 4 ist ein weiteres, elastisch verformbares Federelement 13 vorgesehen, das vorliegend als rotationssymmetrische Scheibenfeder 14 ausgebildet und zwischen der Kernstirnfläche 11 und der Ankerstirnfläche 12 verspannt beziehungsweise vorgespannt gehalten ist. In der dargestellten Ausgangsstellung, also im unbetätigten Zustand, muss das Federelement 13 jedoch nicht unbedingt vorgespannt beziehungsweise verspannt gehalten sein. Die Ausbildung kann gemäß einer alternativen Ausführungsform auch derart erfolgen, dass das Federelement 13 erst bei Betätigung des Ventils 1 zwischen den beiden Stirnflächen 11 und 12 verspannt wird. Die Scheibenfeder 14 weist mittig eine Öffnung 15 auf, durch welche das Druckstück 9 hindurchragt, um an der Kernstirnfläche 11 anzuliegen.

Die Kernstirnfläche 11 weist dabei mittig einen Bereich auf, in welchem sich die Kernstirnfläche 11 senkrecht zur Achse des Ventils 1 erstreckt, und auf welcher das Druckstück 9 aufliegt. Dieser Bereich weist einen Radius auf, der über das Druckstück 9 hinausgeht und somit eine Auflagefläche für die Scheibenfeder 14 bildet. Der Magnetanker 4 weist an seiner Ankerstirnfläche 12 einen Außenbereich auf, in welchem die Ankerstirnfläche 12 ebenfalls im Wesentlichen senkrecht zur Achse 18 des Ventils (durch eine Strich-Punkt-Linie angedeutet) ausgerichtet ist. Dieser Bereich ist dabei ringförmig ausgebildet und liegt am äußersten Rand der Ankerstirnfläche 12. Auf diesem Bereich liegt die Scheibenfeder 14 mit ihrem äußeren Randbereich auf. Die Scheibenfeder 14 bildet somit mit dem Magnetanker 4 und dem Magnetkern 3 jeweils einen Anlagepunkt 16 beziehungsweise 17, die in dem vorliegenden Ausführungsbeispiel als ringförmige Auflageflächen ausgebildet sind. Im Übrigen sind die Kernstirnfläche 11 und die Ankerstirnfläche 13 in Radialerstreckung, also ausgehend von der Achse des Ventils 1, schräg verlaufend ausgebildet, wobei die schräg verlaufenden Bereiche im Wesentlichen parallel zueinander verlaufen, sodass die Kernstirnfläche 11 und die Ankerstirnfläche 12 insoweit komplementär ausgebildet sind.

Im Betrieb, wenn das Magnetventil bestromt beziehungsweise betätigt wird, zieht der Magnetkern 3 den Magnetanker 4 an, wodurch die dazwischen verspannt gehaltene Scheibenfeder 14 verformt wird und dadurch eine Federkraft erzeugt, die zwischen Magnetkern 3 und Magnetanker 4 wirkt.

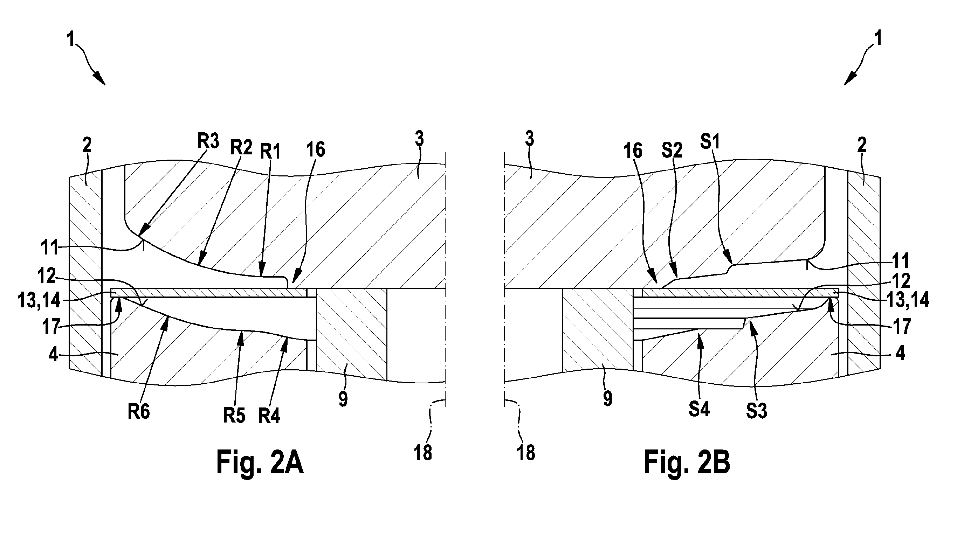

Figur 2 zeigt eine vergrößerte Detailansicht des Ventils 1 gemäß zweier bevorzugter Ausführungsformen, wobei links von der Achse 18 des Ventils 1 ein erstes Ausführungsbeispiel dargestellt ist (Figur 2A) und rechts von der Achse ein zweites Ausführungsbeispiel (Figur 2B).

Die beiden bevorzugten Ausführungsbeispiel haben gemein, dass die Kernstirnfläche 11 und die Ankerstirnfläche 12 derart ausgebildet sind, dass sich die Radialposition der Anlagepunkte zwischen der Scheibenfeder 14 und den beiden Stirnflächen 11, 12 in Abhängigkeit von dem Abstand der Ankerstirnfläche 12 zu der Kernstirnfläche 11 verändert. Dazu weisen die Stirnflächen 11, 12 in Radialerstreckung eine entsprechende Kontur auf, wobei gemäß Figur 2A die Kontur durch mehrere aufeinanderfolgende Radien R1 bis R3 beziehungsweise R4 bis R6 und gemäß Figur 2B durch mehrere aufeinanderfolgende Stufen S1 und S2 beziehungsweise S3 und S4 gebildet beziehungsweise geformt ist, während die Scheibenfeder 14 als ebene beziehungsweise flache Scheibenfeder 14 vorliegt.

Im Ausführungsbeispiel gemäß Figur 2A ist die Kontur der jeweiligen Stirnfläche 11, 12 also gekrümmt ausgebildet, wobei mehrere aufeinanderfolgende Radien vorgesehen sind, um die Krümmung zu bilden. Die Radien R1 bis R3 und die Radien R4 bis R6 sind zweckmäßigerweise jeweils unterschiedlich groß und weisen besonders bevorzugt unterschiedliche Ausgangspunkte auf, wie in Figur 2A angedeutet. Die Konturen der Stirnflächen 11, 12 sind - wie oben erwähntderart gestaltet, dass zumindest einer der Anlagepunkte, vorzugsweise beide Anlagepunkte radial wandern, wenn sich der Abstand zwischen dem Magnetkern 3 und dem Magnetanker 4 verändert. Durch eine entsprechende Wahl der Radien R1 bis R6 wird erreicht, dass beispielsweise der Anlagepunkt 16 beziehungsweise die entsprechende Anlagefläche von innen nach außen wandert, wenn sich der Magnetanker 4 an den Magnetkern 3 annähert und der sogenannte Luftspalt zwischen Magnetanker 4 und Magnetkern 3 verkleinert beziehungsweise verringert wird. So wandert der Anlagepunkt 16 beispielsweise von dem Radius 1 zu dem Radius 2 bis zum Radius 3 an der Kernstirnfläche 11. Gleichzeitig wandert der Anlagepunkt 17 radial von außen nach innen über die Radien R6, R5 und R4. Vorzugsweise sind die Konturen derart gewählt, dass der Abstand der Anlagepunkte 16 und 17 zueinander mit abnehmendem Luftspalt reduziert wird, sodass sich die wirkende Federlänge beziehungsweise der wirkende Federarm beziehungsweise -bereich der Scheibenfeder 14 verkleinert, wodurch die Federkraft erhöht wird. Durch eine entsprechende Wahl der Radien lässt sich somit eine progressive Kraft-Weg-Kennlinie einstellen, die sich vorteilhaft auf das Betriebsverhalten des Ventils 1 auswirkt. Beispielsweise kann hierdurch erreicht werden, dass eine vorteilhafte Dämpfung des Magnetankers 4 beim Annähern an den Magnetkern 3 erfolgt.

Entsprechend verhält es sich bei der gestuften Ausführungsform der Kontur gemäß Figur 2B. Die Stufung beziehungsweise Höhe der Stufen S1 bis S4 sowie deren Abstand zueinander ist derart gewählt, dass sich eine progressive Feder-Weg-Kennlinie ergibt, indem die Anlagepunkte 16, 17 nach außen beziehungsweise nach innen wandern, wenn der Luftspalt reduziert wird.

Durch die vorteilhafte, im Wesentlichen komplementäre Ausbildung der Konturen der Stirnflächen 11, 12 wird erreicht, dass ein besonders kleiner Luftspalt gewährleistet wird, wodurch die wirkenden Magnetkräfte effizienter genutzt werden. Die Stirnflächen 11, 12 sind derart ausgebildet, dass die Kernstirnfläche 11 im Wesentlichen vorsprungartig und die Kernstirnfläche 12 ausnahmeartig ausgebildet ist. Hierdurch ergibt sich eine Vertiefung in dem Magnetanker 4, in welche der Magnetkern 3 mit seiner vorspringenden Kernstirnfläche 11 eindringt.

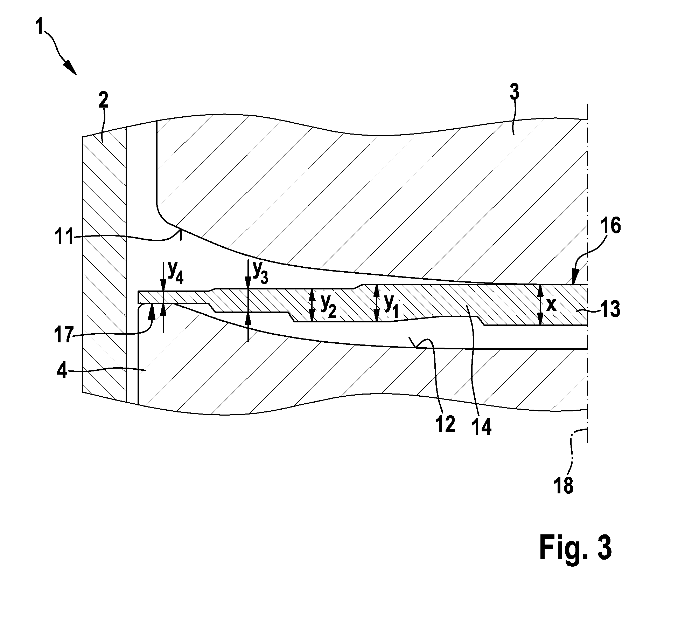

Figur 3 zeigt ein weiteres, bevorzugtes Ausführungsbeispiel, bei welchem die Anlagepunkte 16, 17 in Abhängigkeit vom Abstand des Magnetankers 4 zu dem Magnetkern 3 radial wandern. Hierbei ist die Kontur der Scheibenfeder 14 in Radialerstreckung gestuft ausgebildet, während die Kernstirnfläche 11 und die Ankerstirnfläche 12 gekrümmt vorliegen, wobei die Krümmung im Wesentlichen nur einen Radius umfasst, sodass die Ankerstirnfläche 12 konkav und die Kernstirnfläche 11 konvex ausgebildet sind. Durch die gestufte Ausbildung der Kontur der Scheibenfeder 14 in Radialerstreckung weist diese unterschiedlicher Stärken beziehungsweise - im Längsschnitt betrachtet - Höhen x, y1, y2, y3 und y4 auf. Je nach dem, auf welchem Radius sich die Anlagepunkte 16, 17 befinden, wirkt somit ein unterschiedlich starker Bereich der Scheibenfeder zwischen dem Magnetanker 4 und dem Magnetkern 3, wodurch die Kraft-Weg-Kennlinie der Scheibenfeder 14 beeinflusst wird. Natürlich lassen sich die Ausführungsbeispiele der Figuren 3 und 2 auch miteinander kombinieren, um eine besonders vorteilhafte Ausführungsform zu erhalten.

Gemäß einem weiteren, hier nicht dargestellten Ausführungsbeispiel ist das Federelement 13 nicht als Scheibenfeder 14, sondern als Tellerfeder ausgebildet, die zwischen den gekrümmten Stirnflächen 11 und 12 verspannt gehalten ist. Die Kontur der Stirnflächen 11, 12 muss dabei nicht unbedingt durch mehrere Radien oder Stufen definiert sein. Vielmehr kann auch, wie im Ausführungsbeispiel gemäß Figur 3 gezeigt, eine einfache Krümmung vorliegen. Durch die Form der Tellerfeder, die im Längsschnitt gesehen zumindest im Wesentlichen konisch oder kegelförmig ausgebildet ist, wird erreicht, dass die Anlagepunkte 16 und/oder 17 wandern, sodass auch hier in Abhängigkeit vom Abstand des Magnetankers 4 zu dem Magnetkern 3 unterschiedliche Federhebelarme beziehungsweise Federkräfte wirken.

Auch ist es denkbar, nur eine Stufe beziehungsweise nur zwei Radien vorzusehen, um lediglich zwei unterschiedliche Position für den Anlagepunkt 16 und/oder den Anlagepunkt 17 zu erhalten. Ebenso können noch weitere Radien oder Stufen an den Stirnflächen 11, 12 oder dem Federelement 13 vorgesehen werden.

## Patentansprüche

1. Elektromagnetisch betätigbares Ventil (1), insbesondere für Hydrauliksysteme von Kraftfahrzeugen, mit wenigstens einer Hülse (2), in der ein Magnetkern (3) fest und ein ein Ventilelement (6) betätigender Magnetanker (4) axial verlagerbar angeordnet sind, wobei zwischen einer dem Magnetanker (4) zugewandten Kernstirnfläche (11) des Magnetkerns (3) und einer dem Magnetkern (3) zugewandten Ankerstirnfläche (12) des Magnetankers (4) ein elastisch verformbares Federelement (13) verspannt/verspannbar gehalten ist, und wobei das Federelement (13) mit der Ankerstirnfläche (12) und der Kernstirnfläche (11) jeweils zumindest einen Anlagepunkt (16,17) bildet, wobei eine Kontur des Federelements (13), der Ankerstirnfläche (12) und/oder der Kernstirnfläche (11) in Radialerstreckung derart geformt ist, dass sich die Radialposition zumindest eines der Anlagepunkte (16,17) in Abhängigkeit von dem Abstand der Ankerstirnfläche (12) zu der Kernstirnfläche (11) verändert, **dadurch gekennzeichnet, dass** die jeweilige Kontur in Radialerstreckung gestuft ausgebildet ist.

2. Ventil nach Anspruch 1, **dadurch gekennzeichnet, dass** die Konturen des Federelements (13), der Ankerstirnfläche (12) und/oder der Kernstirnfläche (11) derart geformt sind, dass sich in Abhängigkeit von dem Abstand der Ankerstirnfläche (12) zu der Kernstirnfläche (11) der Abstand der Anlagepunkte (16,17) zueinander verändert.

3. Ventil nach einem der vorhergehenden Ansprüche, **dadurch gekennzeichnet, dass** das Federelement (13) mit der Ankerstirnfläche (12) und/oder der Kernstirnfläche (11) jeweils eine Anlagelinie oder eine Anlagefläche bildet.

4. Ventil nach einem der vorhergehenden Ansprüche, **dadurch gekennzeichnet, dass** das Federelement (13) als insbesondere ebene Scheibenfeder (14) ausgebildet ist.

5. Ventil nach einem den Ansprüchen 1-3, **dadurch gekennzeichnet, dass** die jeweilige Kontur in Radialerstreckung gekrümmt ausgebildet ist.

6. Ventil nach Anspruch 5, **dadurch gekennzeichnet, dass** die jeweilige Krümmung mindestens einen Radius, vorzugsweise mehrere unterschiedliche Radien (R1-R6) aufweist.

7. Ventil nach einem der vorhergehenden Ansprüche, **dadurch gekennzeichnet, dass** die jeweilige gestufte Kontur mindestens eine, vorzugsweise mehrere aufeinanderfolgende Stufen (S1-S4) mit gleicher oder unterschiedlicher Stufung und gleichem oder unterschiedlichem Abstand zueinander aufweist.

8. Ventil nach einem der vorhergehenden Ansprüche, **dadurch gekennzeichnet, dass** die Ankerstirnfläche (12) und die Kernstirnfläche (11) zumindest im Wesentlichen komplementär zueinander ausgebildet sind.

9. Ventil nach einem der vorhergehenden Ansprüche, **dadurch gekennzeichnet, dass** das Federelement (11) als Tellerfeder ausgebildet und die Kernstirnfläche (11) und die Ankerstirnfläche (12) gekrümmt oder gestuft ausgebildet sind.

## Claims

1. Electromagnetically actuated valve (1), in particular for hydraulic systems of motor vehicles, comprising at least one sleeve (2), in which a magnet core (3) is arranged in a fixed manner and a magnet armature (4), which actuates a valve element (6), is arranged so as to be axially movable, wherein an elastically deformable spring element (13) is held in a clamped or clampable manner between a core end face (11) of the magnet core (3) facing the magnet armature (4) and an armature end face (12) of the magnet armature (4) facing the magnet core (3), and wherein the spring element (13) forms at least one contact point (16, 17) with the armature end face (12) and the core end face (11) respectively, wherein a contour of the spring element (13), of the armature end face (12) and/or of the core end face (11) is shaped in such a way in the radial extent that the radial position of at least one of the contact points (16, 17) changes as a function of the distance between the armature end face (12) and the core end face (11), **characterized in that** the respective contour is of stepped design in the radial extent.

2. Valve according to Claim 1, **characterized in that** the contours of the spring element (13), of the armature end face (12) and/or of the core end face (11) are shaped in such a way that the distance between the contact points (16, 17) changes as a function of the distance between the armature end face (12) and the core end face (11).

3. Valve according to one of the preceding claims, **characterized in that** the spring element (13) forms a contact line or a contact surface with the armature end face (12) and/or the core end face (11) respectively.

4. Valve according to one of the preceding claims, **characterized in that** the spring element (13) is designed as a disk spring (14), in particular a flat disk spring.

5. Valve according to one of Claims 1 to 3, **characterized in that** the respective contour is of curved design in the radial extent.

6. Valve according to Claim 5, **characterized in that** the respective curvature has at least one radius, preferably a plurality of different radii (R1-R6).

7. Valve according to one of the preceding claims, **characterized in that** the respective stepped contour has at least one, preferably a plurality of, successive steps (S1-S4), which are equally or differently graduated and are equally or differently spaced.

8. Valve according to one of the preceding claims, **characterized in that** the armature end face (12) and the core end face (11) are designed so as to be at least substantially complementary to one another.

9. Valve according to one of the preceding claims, **characterized in that** the spring element (11) is designed as a diaphragm spring and the core end face (11) and the armature end face (12) are of curved or stepped design.

## Revendications

1. Soupape à commande électromagnétique (1), en particulier pour systèmes hydrauliques de véhicules automobiles, comprenant au moins une douille (2) dans laquelle un noyau magnétique (3) est disposé fixement et une armature magnétique (4) actionnant un élément de soupape (6) est disposée de manière déplaçable axialement, un élément de ressort déformable élastiquement (13) étant serré ou étant retenu de manière à pouvoir être serré entre une surface frontale de noyau (11) du noyau magnétique (3) tournée vers l'armature magnétique (4) et une surface frontale d'armature (12) de l'armature magnétique (4) tournée vers le noyau magnétique (3), et l'élément de ressort (13) formant avec la surface frontale d'armature (12) et la surface frontale de noyau (11) à chaque fois au moins un point d'appui (16, 17),
un contour de l'élément de ressort (13), de la surface frontale d'armature (12) et/ou de la surface frontale de noyau (11) étant formé dans l'étendue radiale de telle sorte que la position radiale d'au moins l'un des points d'appui (16, 17) varie en fonction de la distance de la surface frontale d'armature (12) à la surface frontale de noyau (11), **caractérisée en ce que** le contour respectif dans l'étendue radiale est réalisé de manière étagée.

2. Soupape selon la revendication 1, **caractérisée en ce que** les contours de l'élément de ressort (13), de la surface frontale d'armature (12) et/ou de la surface frontale de noyau (11) sont formés de telle sorte qu'en fonction de la distance de la surface frontale d'armature (12) à la surface frontale de noyau (11), la distance des points d'appui (16, 17) l'un par rapport à l'autre varie.

3. Soupape selon l'une quelconque des revendications précédentes, **caractérisée en ce que** l'élément de ressort (13) forme avec la surface frontale d'armature (12) et/ou la surface frontale de noyau (11) à chaque fois une ligne d'appui ou une surface d'appui.

4. Soupape selon l'une quelconque des revendications précédentes, **caractérisée en ce que** l'élément de ressort (13) est réalisé sous forme de ressort à disque notamment plan (14).

5. Soupape selon les revendications 1 à 3, **caractérisée en ce que** le contour respectif dans l'étendue radiale est réalisé sous forme courbe.

6. Soupape selon la revendication 5, **caractérisée en ce que** la courbure respective présente au moins un rayon, de préférences plusieurs rayons différents (R1-R6).

7. Soupape selon l'une quelconque des revendications précédentes, **caractérisée en ce que** le contour étagé respectif présente au moins un, de préférence plusieurs étages successifs (S1-S4) de même étagement ou d'un étagement différent et de même espacement ou d'un espacement différent les uns par rapport aux autres.

8. Soupape selon l'une quelconque des revendications précédentes, **caractérisée en ce que** la surface frontale d'armature (12) et la surface frontale de noyau (11) sont réalisées au moins essentiellement de manière complémentaire l'une à l'autre.

9. Soupape selon l'une quelconque des revendications précédentes, **caractérisée en ce que** l'élément de ressort (11) est réalisé sous forme de ressort Belleville et la surface frontale de noyau (11) et la surface frontale d'armature (12) sont réalisées sous forme courbe ou étagée.
